# EUROPÄISCHE PATENTSCHRIFT

(11) **EP 1 602 529 B1**
(45) Veröffentlichungstag und Bekanntmachung des Hinweises auf die Patenterteilung: **04.07.2007**
(21) Anmeldenummer: 05011560.9
(22) Anmeldetag: 28.05.2005
(51) Int. Cl.: B60P 3/38, B60P 3/39

(54) **Wohnmobil mit Alkoven- oder Hubbett**
Camper with extendable bed
Camping car avec un lit reconductible

(30) Priorität: 02.06.2004 DE 202004008740 U
(43) Veröffentlichungstag der Anmeldung: 07.12.2005
(73) Patentinhaber: Frankia Pilote GmbH & Co. KG, 95509 Marktschorgast (DE)
(72) Erfinder: Hoang, Giam, 95463 Bindlach (DE)
(74) Vertreter: Ernicke, Klaus Stefan

(56) Entgegenhaltungen:
- DE-U1- 9 012 028
- DE-U1- 9 214 041
- DE-U1- 29 513 973
- GB-A- 2 394 450

## Beschreibung

Die Erfindung betrifft ein Wohnmobil mit einem im Bereich der Fahrerkabine angeordneten Alkoven oder einem ein Hubbett tragenden Hubgestell, wobei die Liegefläche eines Alkovenbettes oder des Hubbettes von in Fahrzeugquerrichtung und mit Abstand zueinander angeordneten Latten gebildet wird. In Wohnmobilen ist das Raumangebot in der Regel knapp, so dass die für ein Bett zur Verfügung stehende Fläche knapp bemessen sein muss, und oft nicht ausreicht, dass eine ausgewachsene Person in Fahrzeuglängsrichtung schlafen kann. Um hier Abhilfe zu schaffen, wird vielfach eine Bettverlängerung vorgesehen, beispielsweise in Form eines die Liegefläche heckseitig verlängernden, an den Boden des Alkovens bzw. des Hubgestells angesetzten Brettes. Eine solche Maßnahme ist jedoch relativ umständlich und hinsichtlich der Verstauung des Verlängerungsbrettes bei Nichtgebrauch problematisch. Hinsichtlich Handhabung und Verstauung ist auch eine aus DE 295 13 973 U1 bekannte Lösung: Ein Auflagerost ist so ausgestaltet, dass seine Latten zu einem brettartig steifen Gebilde zusammenschiebbar sind, welches im Fahrzeug, beispielsweise in einer Aufnahme an der Rückenlehne eines Sitzes verstaubar ist. Dokument 632394450 offenbart auch ein ähnliches Bett.

Aufgabe der Erfindung ist es, ein Wohnmobil mit Alkoven- oder Hubbett bereit zu stellen, welches einen erhöhten Benutzerkomfort bietet.

Diese Aufgabe wird gemäß Anspruch 1 dadurch gelöst, dass die Latten in Fahrzeugquerrichtung ausgerichtet sind, und dass zumindest ein Teil der Latten unter Veränderung ihres gegenseitigen Abstands relativ zueinander und in Fahrzeuglängsrichtung verschiebbar gelagert sind, wodurch das Bett von einer verkürzten Nichtgebrauchsstellung in eine Gebrauchsstellung verlängerbar ist, in der es über den hinteren Rand des Bodens mit einem Überstand hinaussteht. Auf diese Weise lässt sich eine längenvariable Liegefläche schaffen. Im zusammengeschobenen Zustand der Latten, wenn sich diese also praktisch gegenseitig berühren, steht eine in Fahrzeuglängsrichtung verkürzte Liegefläche zur Verfügung. Dabei ist die Länge der Liegefläche im verkürzten Zustand derart bemessen, dass sie etwa der Länge des Bodens des Alkovens bzw. des Hubgestells in Fahrzeuglängsrichtung entspricht. Ausgehend von dieser Nichtgebrauchsstellung kann die Liegefläche in Fahrzeuglängsrichtung vergrößert werden, indem die zusammengeschobenen Latten wieder voneinander entfernt werden. In der Gebrauchsposition nehmen die Latten ihren maximalen Abstand voneinander ein, wobei der Längengewinn gegenüber der Nichtgebrauchsposition etwa gleich der Summe der Abstände zwischen den relativ zueinander verschiebbaren Latten ist. Im Gebrauchszustand steht somit eine gegenüber der Bodenlänge um den Überstand verlängerte Liegefläche zur Verfügung.

Es ist zwar denkbar, dass die gesamte Liegefläche von derartigen abstandsvariablen Latten gebildet wird. In der Regel ist es jedoch ausreichend, nur einen Teil der Liegfläche in Form solcher Latten auszubilden. Der restliche Teil kann, wie bei einer bevorzugten Ausgestaltung der Erfindung, von einem in Fahrzeuglängsrichtung verschiebbaren Lattenrost mit festen Lattenabständen gebildet sein. Vorzugsweise bildet dieser Lattenrost den hinteren, zum Fahrzeugheck weisenden Teil der Liegefläche. Ein derart angeordneter Lattenrost mit feststehenden Latten lässt sich mit einer solchen Steifigkeit und mechanischen Stabilität herstellen, dass der über den Hinterrand des Alkovens bzw. des Hubgestells hinausragende Überstand ausreichend belastbar ist. Erforderlichenfalls kann ein Teil der Belastung durch eine Abstützung am Fahrzeugboden oder an einer Vertikalwand des Wohnmobils abgefangen werden. Denkbar ist natürlich auch, dass an den Boden ein Verlängerungsbrett angebracht wird, das zur Abstützung des Überstands dient. Die abstandsvariablen Latten sind vorzugsweise durch ein ihren gegenseitigen Maximalabstand bestimmendes Zugmittel miteinander verbunden. Auf diese einfache Weise sind somit sämtliche Latten miteinander bewegungsgekoppelt.

Die Erfindung wird nun anhand von in den beigefügten Zeichnungen dargestellten Ausführungsbeispielen näher erläutert. Es zeigen:
- Fig. 1: ein Alkovenmobil mit zwei in Fahrzeugslängsrichtung angeordneten Betten, in schematischer Draufsicht,
- Fig. 2: einen Querschnitt längs der Linie II-II in Fig. 1,
- Fig. 3: ein Hubbett eines vollintegrierten Wohnmobils mit zwei sich in Fahrzeuglängsrichtung erstreckenden Liegeplätzen, in schematischer Draufsicht,
- Fig. 4: eine schematisierte Seitenansicht des Wohnmobils von Fig. 3,
- Fig. 5: ein vollintegriertes Wohnmobil in einer Fig. 3 entsprechenden Darstellung, bei dem jedoch ein Hubbett mit zwei sich in Fahrzeugquerrichtung erstreckenden Liegeplätzen vorhanden ist, und
- Fig. 6: eine schematisierte Seitenansicht des Wohnmobiles nach Fig. 5.

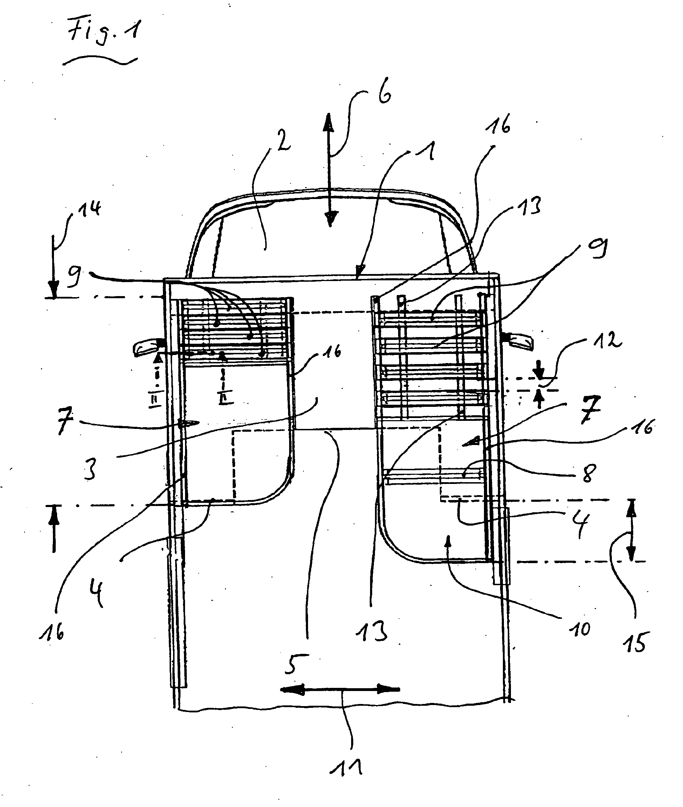

Fig. 1 zeigt ein Wohnmobil mit einem Alkoven 1. Der über der Fahrerkabine 2 angeordnete Schlafraum ist unterseits durch einen Boden 3 begrenzt. Der hintere, d.h. in Richtung des Fahrzeughecks weisende Rand 4. der Auflagefläche weist eine mittige, den Zugang zur Fahrerkabine 2 erleichternde Ausnehmung 5 auf. Auf dem Boden 3 sind in Fahrzeugslängsrichtung 6 mit seitlichem Abstand zueinander zwei Einzelbetten 7 angeordnet. Die von diesen zur Verfügung gestellte Liegefläche wird jeweils von sich in Fahrzeugquerrichtung 11 erstreckenden Latten 8, 9 gebildet. Der hintere, also zum Fahrzeugheck weisende Längsabschnitt der Liegefläche ist in Form eines in Fahrzeuglängsrichtung 6 verschiebbaren Lattenrostes mit festen Lattenabständen ausgebildet. Die Latten 8, von denen aus Vereinfachungsgründen in Fig. 1 nur eine einzige dargestellt ist, sind dabei an einem Rahmengestell (nicht dargestellt) fixiert. Der restliche Bereich der Liegefläche ist längenvariabel und wird durch die Latten 9 gebildet. Diese sind in Fahrzeuglängsrichtung 6 sowie in der gleichen Richtung relativ zueinander verschiebbar gelagert, d.h. die Abstände 12 zwischen ihnen sind variabel. Die abstandsvariablen Latten 9 sind mit zwei in Fahrzeugquerrichtung 11 beabstandeten, in Form von Textilbändern 13 ausgebildeten Zugmitteln miteinander verbunden. Das hintere Ende der Textilbänder 13 ist mit dem Lattenrost 10, ihr vorderes Ende mit einem Wandbereich des Alkovens 1 verbunden. Bei einer Verschiebung des Lattenrostes 10 in Fahrzeuglängsrichtung 6 werden somit die abstandsvariablen Latten 9 ziehharmonikaartig auseinander gezogen bzw. zusammengeschoben. In der Nichtgebrauchsstellung, so wie er in Fig. 1 links dargestellt ist, weisen die Betten 7 bzw. deren Liegeflächen eine Länge auf, die etwa der Länge 14 der seitlichen Bereiche des Bodens 3 entspricht. In ihrer Gebrauchsposition sind die Betten 7 über den hinteren Rand 4 des Bodens 3 hinaus verlängert.

Der gegenüber der Nichtgebrauchsstellung gewonnene, über den Rand 4 des Bodens 3 hinaus stehende Überstand 15 in der Gebrauchsstellung des Betts entspricht etwa der Summe der Abstände 12 zwischen den abstandsvariablen Latten 9.

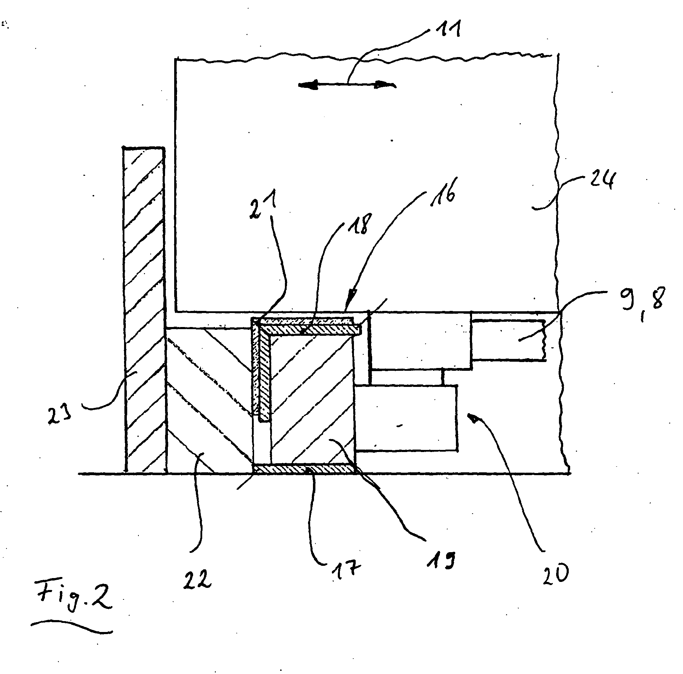

Die Latten 9 sowie der Lattenrost 10 sind in Fahrzeuglängsrichtung 6 durch seitliche Schienen 16 geführt. Eine Möglichkeit diese Schienen 16 auszubilden ist in Fig. 2 gezeigt. Eine Schiene 16 wird von einer unteren Leiste 17 aus Kunststoff und einem oberen, ebenfalls aus Kunststoff bestehenden Winkelprofil 18 gebildet. Zwischen der Leiste 17 und dem Winkelprofil 18 ist ein in Querschnitt quaderförmiges Gleitstück 19 in Fahrzeuglängsrichtung 6 geführt. Die Latten 8, 9 sind über ein Verbindungsteil 20 am Gleitstück 19 fixiert. Im Falle des Lattenrostes 10 werden die Gleitstücke 19 durch dessen Seitenholme gebildet, die sich praktisch über die gesamte Länge des Lattenrostes erstrecken. Im Falle der abstandsvariablen Latten 9 sind jeder Latte 9 zwei Gleitstücke 19 zugeordnet, wobei deren Länge kleiner oder gleich der Breite der Latten 9 ist. Auf der den Latten 8, 9 abgewandten Seite ist das Winkelprofil unter Zwischenlage eines Winkelprofils 21 aus einem festen Material, beispielsweise aus Aluminium, an einer Leiste 22 fixiert, die wiederum an einer Seitenbegrenzung 23, etwa der Seitenwand des Wohnmobils, befestigt ist. Aufgrund der Zwischenlage der Leiste 22 ist zwischen der Schiene 16 und der Seitenbegrenzung 23 ein Abstand vorhanden, in den sich eine von den Latten 8, 9 getragene Matratze 24 seitlich hinein erstreckt und die Schienen 16 überdeckt.

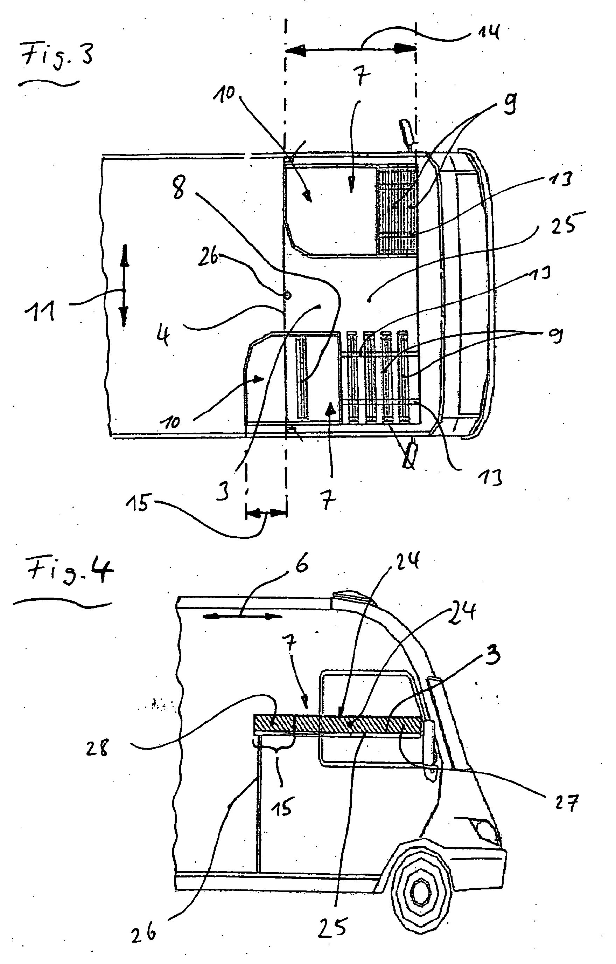

Fig. 3 zeigt ein vollintegriertes Wohnmobil. Hier befinden sich die Betten 7 auf einem Hubgestell 25, dessen Oberseite von einem Boden 3 gebildet ist. Wie aus Fig. 4 ersichtlich ist, steht in der Gebrauchsstellung ein Bett 7 mit dem oben erwähnten Überstand 15 über den Rand 4 des Bodens 3 hinaus. Dieser Überstand ist erforderlichenfalls durch eine Stütze, etwa die in Fig. 4 gezeigte, sich am Fahrzeugboden abstützende Vertikalstütze 26, stabilisiert. In Fig. 4 ist angedeutet, dass eine für ein längenvariables Bett geeignete Matratze 24 sich aus zwei Teilen 27, 28 zusammensetzt. Der Teil 27 weist eine Länge auf, die etwa der Länge 14 der Auflagefläche bzw. der Länge der Liegefläche eines Bettes 7 im Nichtgebrauchszustand entspricht. Der andere Teil 28 ist etwa so lang wie der Überstand 15.

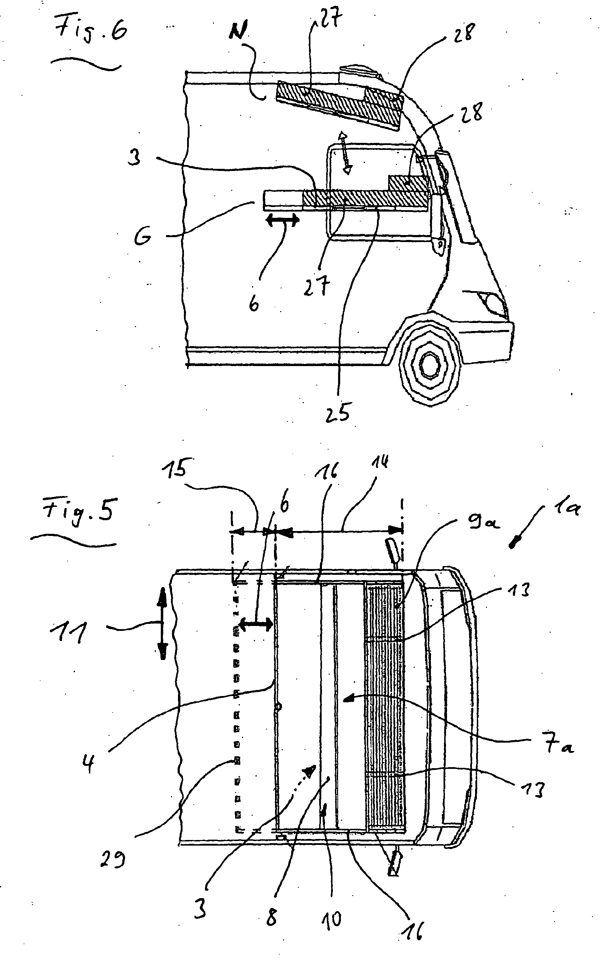

Bei dem in Fig. 5 und 6 gezeigten Ausführungsbeispiel ist eine sich über die gesamte Breite des Bodens 3 erstreckende Liegefläche vorhanden. Dementsprechend erstrecken sich die abstandsvariablen Latten 9a ebenfalls etwa über die gesamte Breite des Bodens 3. Gleiches trifft für den Lattenrost 10 und dessen feststehende Latten 8 zu. Auch bei diesem Ausführungsbeispiel ist der Lattenrost 10 in Fahrzeuglängsrichtung 6 verschiebbar. In der Nichtgebrauchsstellung des Bettes 7a ist dessen Abmessung in Fahrzeuglängsrichtung etwa so groß wie die Länge 14 des Bodens 3. In der Gebrauchsstellung, die in Fig. 5 durch die gestrichelte Linie 29 angedeutet ist, ragt die Liegefläche bzw. das Bett 7a ebenfalls mit einem Überstand 15 über den Rand 4 des Bodens 3 hinaus. Da sich bei dem Bett 7a die Latten 8, 9 über eine relativ große Spannweite erstrecken, sind zusätzliche Schienen (nicht dargestellt) vorhanden, die sich beispielsweise im Bereich der Textilbänder 13 in Fahrzeuglängsrichtung 6 erstrecken. In Fig. 6 ist gezeigt, wie das Hubgestell 25 eines vollintegrierten Wohnmobils von einer Gebrauchsstellung G in eine Nichtgebrauchsstellung N schwenkbar ist. In letzterer befindet sich das Bett 7a in seinem längenverkürzten Zustand. Das separate Matratzenteil 28 wird beispielsweise auf dem anderen Matratzenteil 27 verstaut. Eine solche Verstau-Möglichkeit bietet sich natürlich bei sämtlichen beschriebenen Ausführungsbeispielen an.

### Bezugszeichenliste

- 1: Alkoven
- 2: Fahrerkabine
- 3: Boden
- 4: Rand
- 5: Ausnehmung
- 6: Fahrzeuglängsrichtung
- 7: Einzelbett
- 8: Latte
- 9: Latte
- 10: Lattenrost
- 12: Abstand
- 13: Textilband
- 14: Länge
- 15: Überstand
- 16: Schiene
- 17: Leiste
- 18: Winkelprofil
- 19: Gleitstück
- 20: Verbindungsteil
- 21: Winkelprofil
- 22: Leiste
- 23: Seitenbegrenzung
- 24: Matratze
- 25: Hubgestell
- 26: Vertikalstütze
- 27: Teil
- 28: Teil
- 29: gestrichelte Linie
- G: Gebrauchsstellung
- N: Nichtgebrauchsstellung

## Patentansprüche

1. Wohnmobil mit einem auf dem Boden eines Alkovens oder eines Hubgestells fixierten Bett, dessen Liegefläche von mit Abstand zueinander angeordneten Latten gebildet wird,
**dadurch gekennzeichnet, dass**
die Latten in Fahrzeugquerrichtung (11) ausgerichtet sind, und dass zumindest ein Teil der Latten (9) unter Veränderung ihres gegenseitigen Abstands relativ zueinander und in Fahrzeuglängsrichtung (6) verschiebbar gelagert sind, wodurch das Bett von einer verkürzten Nichtgebrauchsstellung in eine Gebrauchsstellung verlängerbar ist, in der es über den hinteren Rand des Bodens mit einem Überstand (15) hinaussteht.

2. Wohnmobil nach Anspruch 1,
**dadurch gekennzeichnet, dass**
ein Längsabschnitt der Liegefläche von einem in Fahrzeuglängsrichtung (6) verschiebbaren Lattenrost (10) mit festen Lattenabständen gebildet wird.

3. Wohnmobil nach Anspruch 2,
**dadurch gekennzeichnet, dass**
der Lattenrost (10) den hinteren, zum Fahrzeugheck weisenden Teil der Liegefläche bildet.

4. Wohnmobil nach einem der Ansprüche 1 bis 3,
**dadurch gekennzeichnet, dass**
die relativ zueinander verschiebbaren Latten (9) durch ein ihren gegenseitigen Maximalabstand bestimmendes Zugmittel miteinander verbunden sind.

5. Wohnmobil nach Anspruch 3 oder 4,
**dadurch gekennzeichnet, dass**
der Lattenrost (10) und die abstandsvariablen Latten (9) in einer gemeinsamen Führung verschiebbar sind, wobei die hinterste der abstandsvariablen Latten (9) mit dem Lattenrost (10) bewegungsgekoppelt ist.

6. Wohnmobil nach einem der Ansprüche 2 bis 5,
**dadurch gekennzeichnet, dass**
der Lattenrost (10) und die abstandsvariablen Latten (9) in seitlichen Schienen (16) geführt sind.

7. Wohnmobil nach einem der vorhergehenden Ansprüche,
**dadurch gekennzeichnet, dass**
der Überstand (15) am Fahrzeugboden oder an einer Vertikalwand abgestützt ist.

## Claims

1. Camper comprising a bed which is fixed to the floor of an alcove or of a lift-up frame and whose lying surface is formed by slats arranged at a spacing from one another, **characterized in that** the slats are oriented in the transverse direction (11) of the vehicle, and **in that** at least some of the slats (9) are mounted such that they can be displaced relative to one another and in the longitudinal direction (6) of the vehicle, with their mutual spacing being changed in the process, whereby the bed can be extended from a shortened non-use position into a use position in which it protrudes with an overhang (15) beyond the rear edge of the floor.

2. Camper according to Claim 1, **characterized in that** a longitudinal portion of the lying surface is formed by a slatted base section (10) with fixed slat spacings that can be displaced in the longitudinal direction (6) of the vehicle.

3. Camper according to Claim 2, **characterized in that** the slatted base section (10) forms the rear part of the lying surface that faces the rear of the vehicle.

4. Camper according to one of Claims 1 to 3, **characterized in that** the slats (9) which can be displaced relative to one another are interconnected by way of a pulling means which determines their mutual maximum spacing.

5. Camper according to Claim 3 or 4, **characterized in that** the slatted base section (10) and the variable-spacing slats (9) can be displaced in a common guide, the rearmost one of the variable-spacing slats (9) being coupled in movement with the slatted base section (10).

6. Camper according to one of Claims 2 to 5, **characterized in that** the slatted base section (10) and the variable-spacing slats (9) are guided in lateral rails (16).

7. Camper according to one of the preceding claims, **characterized in that** the overhang (15) is supported on the vehicle floor or on a vertical wall.

## Revendications

1. Camping car ayant un lit qui est immobilisé sur le fond d'une alcôve ou d'un bâti de levage et dont la surface de couchage est formée de lattes disposées à distance les unes des autres,
**caractérisé**
**en ce que** les lattes sont dirigées dans la direction (11) transversale du véhicule et en ce qu'au moins une partie des lattes (9) sont montées coulissantes relativement les unes aux autres et dans la direction (6) longitudinale du véhicule avec modification de leur distance mutuelle, le lit pouvant ainsi être rallongé d'une position raccourcie de non utilisation à une position d'utilisation, dans laquelle il dépasse du bord arrière du fond d'un certain dépassement (15).

2. Camping car suivant la revendication 1,
**caractérisé**
**en ce qu'**une partie longitudinale de la surface de couchage est formée par un treillis (10) de lattes coulissant dans la direction (6) longitudinale du véhicule avec des intervalles fixes entre les lattes.

3. Camping car suivant la revendication 2,
**caractérisé**
**en ce que** le treillis (10) de lattes forme la partie arrière tournée vers l'arrière du véhicule de la surface de couchage.

4. Camping car suivant l'une des revendications 1 à 3,
**caractérisé**
**en ce que** les lattes (9) pouvant coulisser relativement les unes par rapport aux autres sont assemblées entre elles par des moyens de traction déterminant leur distance mutuelle maximum.

5. Camping car suivant la revendication 3 ou 4,
**caractérisé**
**en ce que** le treillis (10) de lattes et les lattes (9) à distance variable peuvent coulisser dans un guidage commun, la plus en arrière des lattes (9) à distance variable étant couplée en mouvement avec le treillis (10) de lattes.

6. Camping car suivant l'une des revendications 2 à 5, dans lequel le treillis (10) de lattes et les lattes (9) à distance variable sont guidées dans des rails (16) latéraux.

7. Camping car suivant l'une des revendications précédentes,
**caractérisé**
**en ce que** le dépassement (15) est supporté par le fond du véhicule ou sur une paroi verticale.
